# FASCICULE DE BREVET EUROPEEN

(11) **EP 2 120 593 B1**
(45) Date de publication et mention de la délivrance du brevet: **12.01.2011**
(21) Numéro de dépôt: 07866409.1
(22) Date de dépôt: 19.10.2007
(51) Int. Cl.: A23D 9/00, A23L 1/29, A23L 1/307, A23L 1/31, A23L 1/325, A23D 9/02

(54) **SUBSTITUT DE MATIERE GRASSE ANIMALE**
TIERFETTERSATZ
ANIMAL FAT SUBSTITUTE

(30) Priorité: 19.10.2006 FR 0609184
(43) Date de publication de la demande: 25.11.2009
(73) Titulaire: SOCIETE D'INNOVATION DE PRODUITS AGRO-ALIMENTAIRES SAS, 69006 Lyon (FR)
(72) Inventeur: GAUD, Bernard, 69006 Lyon (FR); ALFOS, Carine, 33600 Pessac (FR)
(74) Mandataire: Maureau, Philippe
(86) Numéro de dépôt international: PCT/FR2007/001732
(87) Numéro de publication internationale: WO 2008/047012

(56) Documents cités:
- EP-A1- 0 470 658
- EP-A1- 1 557 090
- WO-A-2005/034652
- DE-A1- 2 317 045
- FR-A1- 2 608 900
- US-A- 3 549 387
- US-A- 4 803 092
- US-A1- 2002 106 426

## Description

La présente invention concerne un substitut de matière grasse animale, son procédé de fabrication, son utilisation, ainsi des préparations alimentaires incorporant au moins un de ces substituts et leur procédé de fabrication.

Dans l'industrie agroalimentaire, les matières grasses animales (graisses, huiles...) sont fréquemment employées dans la fabrication de préparations alimentaires. Elles sont en général employées en tant qu'agent texturant (ou liant), et/ou en tant que révélateur de goût.

Cependant, l'incorporation d'une quantité excessive de matières grasses animales dans les préparations alimentaires entraîne des conséquences néfastes du point de vue nutritionnel, puisque ces préparations présentent alors un taux élevé d'acides gras saturés avec un mauvais rapport entre les acides gras poly-insaturés oméga 6 et oméga 3, augmentant ainsi le risque de maladies cardiovasculaires.

Les produits de salaison par exemple présentent un taux élevé de matière grasse animale (généralement constituée de bardière de porc) : les saucissons secs traditionnels en comportent 20 à 30%, les saucisses de Strasbourg ou de Francfort environ 40%, et la mortadelle 60%.

La substitution d'une partie ou de la totalité de la matière grasse animale dans des préparations alimentaires a fait l'objet de diverses publications et demandes de brevet.

Certaines études ont porté sur la substitution de la matière grasse animale par des liants de type carraghénanes, protéines de soja, protéines de lait, céréales comme l'avoine et le son ou amidons modifiés. Néanmoins, certaines réglementations comme la réglementation américaine limitent leurs taux d'incorporation (lorsque les taux sont supérieurs, le produit doit porter la mention « de type... »).

De nombreuses études ont porté sur la substitution de la matière grasse animale par des huiles végétales, en association ou non avec les liants ci-dessus mentionnés.

Le brevet FR 2506125, concerne un procédé de fabrication de produits de charcuterie fraîche tels que les saucissons, les saucisses, les pâtés. Il consiste à ajouter directement de l'huile végétale, comme de l'huile de tournesol, dans la masse constituée de viande. Néanmoins, les produits obtenus ne vont pas présenter la même texture (les produits sont plus compacts), ni le même aspect visuel (on ne va pas retrouver les marquants), ni le même goût.

Le brevet FR 2608900 divulgue un procédé de fabrication de produits de charcuterie dont les graisses animales sont remplacées par des graisses végétales liquides qu'il faut alors solidifier et stabiliser par un processus long et contraignant passant notamment par la formation d'une émulsion.

Le brevet EP0787436 concerne un procédé de préparation d'une saucisse présentant un faible taux de graisse, consistant à ajouter à la viande des protéines de petit-lait dénaturées par la chaleur et une émulsion de protéines de petit-lait dénaturées par la chaleur avec une huile comestible pouvant être une huile de palme.

L'introduction de ces graisses végétales liquides ou huiles, dans les procédés de ces deux derniers brevets, se fait par l'intermédiaire d'une émulsion, ce qui entraîne une perte de temps et complique le procédé. De plus, l'utilisation d'une émulsion entraîne un apport en eau non négligeable. Pour des produits de charcuterie, cet apport en eau n'est pas compatible avec les opérations de séchage ultérieures, par exemple pour les saucissons.

Les solutions de l'art antérieur ne permettent pas de conserver les qualités organoleptiques des préparations alimentaires dans lesquelles les graisses animales sont substituées, tout en alliant de bonnes qualités nutritionnelles. II existe donc un besoin de trouver un moyen de substituer totalement ou partiellement les graisses animales des préparations alimentaires quelqu'en soit le type, de façon simple, et sans que leurs qualités organoleptiques soient changées.

La présente invention résout le problème technique en développant un substitut de matière grasse animale, à base de matière grasse végétale, présentant un pouvoir athérogène moindre. Ce substitut présente de bonnes qualités nutritionnelles et il peut être incorporé facilement dans de multiples préparations alimentaires sans en modifier leurs qualités organoleptiques (texture, goût, toucher, aspect visuel...).

Le substitut de matière grasse animale selon la présente invention comprend un mélange d'une huile de palme semi-solide, représentant de 70% à 80% de la masse totale du substitut, et sélectionnée parmi le groupe constitué par de l'huile de palme fractionnée ou de l'huile de palme totalement ou partiellement hydrogénée, avec au moins une huile végétale fluide à température ambiante possédant des qualités gustatives et/ou nutritionnelles, représentant de 20 à 30% de la masse totale du substitut.

L'huile de palme fractionnée peut être obtenue par un procédé de fractionnement qui a pour but de réaliser une séparation entre les constituants des huiles en fonction de leurs points de fusion. Le plus souvent, le procédé consiste à refroidir l'huile pour provoquer et contrôler la cristallisation d'une partie solide. Après maturation des cristaux formés, cette partie solide est séparée par filtration d'une fraction fluide.

En outre, dans le substitut de matière grasse animale de la présente invention, des ingrédients supplémentaires peuvent être ajoutés audit mélange. II peut s'agir d'additifs alimentaires choisis parmi les agents colorants, les agents de conservation, les antioxydants, les agents de texture (dont les émulsifiants par exemple, les amidons modifiés), les édulcorants, les exhausteurs de goût, les acidifiants, seuls ou en mélange. Il peut s'agir de tout autre ingrédient compatible avec le substitut, à l'exception de l'eau. En effet, le substitut ne peut pas être une émulsion.

Ledit substitut selon l'invention est caractérisé en ce qu'il est exempt d'eau. En effet, s'il comportait de l'eau, c'est-à-dire s'il était par exemple une émulsion, cela entraînerait l'impossibilité de l'utiliser dans des produits de salaisons qui subissent une étape de séchage ou dans des produits qui doivent être cuits, l'étape de cuisson entraînant alors une perte en eau conduisant à la destruction de l'émulsion.

Dans un mode de réalisation particulier, l'huile de palme semi-solide choisie comme étant l'huile de palme totalement ou partiellement hydrogénée représente 72 à 77%, en particulier 75%, de la masse totale du substitut et l'huile végétale fluide à température ambiante représente 23 à 28%, en particulier 25%, de la masse totale du substitut.

L'huile de palme est une huile extraite par pression à chaud de la pulpe des fruits du palmier à huile. Cent kilogrammes de fruits donnent environ vingt-deux kilogrammes d'huile de palme.

L'huile de palme est un ingrédient essentiel de la cuisine africaine, et elle se retrouve dans de nombreux plats sud-américains ou asiatiques. Elle est très utilisée dans les aliments industriels et les cosmétiques par son faible coût de production. L'huile de palme brute est le produit végétal le plus riche en β-carotène, ce qui lui donne une teinte jaune orangé à rouge selon sa concentration en caroténoïdes. La cuisson détruit ces molécules : elle devient blanche après avoir bouilli plusieurs minutes.

Sa richesse en acides gras saturés la rend semi-solide à température ambiante (on la qualifie « d'huile concrète ») : son point de fusion se situe entre 35 et 42°C.

Lorsque l'huile de palme semi-solide présente dans le substitut de matière grasse animale selon la présente invention est l'huile de palme partiellement hydrogénée, elle peut comprendre une huile de palme raffinée et une huile de palme hydrogénée.

L'huile de palme raffinée est une huile purifiée. Le raffinage consiste en une série de traitements de purification effectués le plus souvent en continu et ayant pour but de débarrasser les huiles brutes des impuretés diverses qu'elles contiennent, comme les acides gras libres et les phospholipides. Le raffinage a pour but de maintenir ou d'améliorer les caractères organoleptiques et la stabilité des corps gras alimentaires.

L'huile de palme hydrogénée est une huile qui a subi une hydrogénation, c'est-à-dire une opération qui consiste à fixer l'hydrogène au niveau des doubles liaisons des acides gras non saturés. L'hydrogénation permet d'élever la température de fusion et d'obtenir ainsi un produit plus solide à température ambiante. Outre des caractéristiques de fusion modifiées, l'huile de palme hydrogénée présente une meilleure résistance à l'oxydation, ce qui permet notamment de limiter le rancissement.

Dans un mode de réalisation, l'huile de palme partiellement hydrogénée peut comprendre de 10 à 60% d'huile de palme raffinée et de 90 à 40% d'huile de palme hydrogénée.

Dans un mode de réalisation, l'huile de palme partiellement hydrogénée peut comprendre de 10 à 50% d'huile de palme raffinée et de 90 à 50% d'huile de palme hydrogénée.

Dans un mode de réalisation, l'huile de palme partiellement hydrogénée peut comprendre de 30 à 50% d'huile de palme raffinée et de 70 à 50% d'huile de palme hydrogénée.

Dans un mode de réalisation particulier, l'huile de palme partiellement hydrogénée comprend 20 à 40% d'huile de palme raffinée et 60 à 80% d'huile de palme hydrogénée.

Dans un mode de réalisation particulier, l'huile de palme partiellement hydrogénée comprend 45 à 50% d'huile de palme raffinée et 50 à 55% d'huile de palme hydrogénée.

Afin d'obtenir un subsitut présentant de bonnes qualités nutritionnelles et organoleptiques, celui-ci comprend donc également au moins une huile végétale fluide à température ambiante possédant des qualités gustatives et/ou nutritionnelles.

Par huile végétale fluide à température ambiante possédant des qualités gustatives et/ou nutritionnelles, on entend une huile qui possède un goût agréable et compatible avec les préparations alimentaires fabriquées et/ou présentant un faible pouvoir athérogène (lequel peut être déterminé notamment en se basant sur la composition en acides gras et sur le calcul du rapport entre les acides gras oméga 6 et oméga 3).

Cette huile peut être choisie parmi les huiles de céréales, les huiles d'oléagineuses et les huiles de fruits, seules ou en mélange.

II peut par exemple s'agir d'une huile de colza, d'une huile d'olive, d'une huile de tournesol, d'une huile de germe de blé, d'une huile de maïs, d'une huile de soja, d'une huile de sésame, d'une huile de son de riz, d'une huile de pépins de raisins ou d'une huile d'arachide, seules ou en mélange.

L'huile végétale fluide à température ambiante possédant des qualités gustatives et/ou nutritionnelles peut être une huile raffinée.

Là présente invention concerne également le procédé de fabrication du substitut de matière grasse animale ci-dessus décrit. Ce procédé comprend les étapes suivantes, décrites ici avec l'huile semi-solide choisie comme étant l'huile de palme totalement ou partiellement hydrogénée. II est entendu que le procédé selon la présente invention pourrait être adapté par l'homme du métier à l'utilisation de l'huile de palme fractionnée.

### - étape A : fusion de l'huile de palme totalement ou partiellement hydrogénée.

L'huile de palme totalement ou partiellement hydrogénée est chauffée à une température allant de 38 à 60°C. Dans un mode de réalisation, cette température est comprise entre 40 et 52 ° C.

L'huile de palme peut être une huile de palme hydrogénée.

L'huile de palme peut comprendre une huile de palme raffinée et une huile de palme hydrogénée, dans les proportions indiquées précédemment. Dans un mode de réalisation, on fait fondre séparément l'huile de palme raffinée et l'huile de palme hydrogénée, puis on les mélange. Dans un autre mode de réalisation, on fait fondre ensemble l'huile de palme raffinée et l'huile de palme hydrogénée. Dans un autre mode de réalisation, le mélange d'huile de palme raffinée et d'huile de palme hydrogénée a été réalisé antérieurement et il est mis en fusion.

### - étape B : mélange de l'huile de palme totalement ou partiellement hydrogénée fondue avec au moins une huile végétale fluide à température ambiante possédant des qualités gustatives et/ou nutritionnelles.

Cette huile peut être choisie parmi les huiles de céréales, les huiles d'oléagineuses et les huiles de fruits, seules ou en mélange.

Il peut par exemple s'agir d'une huile de colza, d'une huile d'olive, d'une huile de tournesol, d'une huile de germe de blé, d'une huile de maïs, d'une huile de soja, d'une huile de sésame, d'une huile de son de riz, d'une huile de pépins de raisins ou d'une huile d'arachide, seules ou en mélange.

Lors de cette étape, des ingrédients supplémentaires autres que l'eau peuvent être ajoutés au mélange. Il peut s'agir d'additifs alimentaires choisis parmi les agents colorants, les agents de conservation, les antioxydants, les agents de texture (dont les émulsifiants par exemple, les amidons modifiés), les édulcorants, les exhausteurs de goût, les acidifiants, seuls ou en mélange. Il peut s'agir de tout autre ingrédient compatible avec le substitut, à l'exception de l'eau. En effet, le substitut ne peut pas être une émulsion.

### - étape C : refroidissement sous agitation.

Dans un mode de réalisation, le substitut atteint une température comprise entre 30 et 37°C. Dans un mode de réalisation, elle est comprise entre 34 et 36°C. Dans un mode de réalisation particulier, elle est de 35°C.

### - étape D : stockage au froid.

Le substitut est placé au froid à une température pouvant aller de -10°C à -8°C.

La présente invention concerne également l'utilisation d'au moins un substitut de matière grasse animale tel que décrit précédemment dans une préparation alimentaire, ainsi que toute préparation alimentaire comprenant au moins un substitut de matière grasse animale.

Ladite préparation alimentaire peut être à base de viande et/ou de poisson. Elle peut être à base de viande de porc, de viande bovine (veau, vache, boeuf), de viande de volaille (oie, poule, poulet, dinde, dindon, faisan...), de viande de gibier (lapin, chevreuil, sanglier...), de viande de mouton et/ou de poisson (saumon, truite, perche, lotte, cabillaud...).

Dans un mode de réalisation, la préparation alimentaire est un produit sec ou à cuire, un produit cuit fabriqué à froid ou un produit cuit fabriqué à chaud, et il peut s'agir d'un produit de salaison.

Parmi les produits secs ou à cuire, on peut citer les produits de salaison comme les saucissons secs, les saucisses d'Auvergne, les saucissons de Lyon, le salami, le cervelas, les saucissons à cuire, les saucisses de Toulouse.

Parmi les produits cuits fabriqués à froid, on peut citer les saucisses de Francfort, les saucisses de Strasbourg, les saucissons cuits de Paris, la mortadelle, la galantine, la ballottine.

Parmi les produits cuits fabriqués à chaud, on peut citer les rillettes, les pâtés comme les pâtés de foie, les pâtés de campagne, les mousses comme la mousse de foie, la mousse de foie gras.

Dans un mode de réalisation, une partie de la matière grasse animale de ces préparations alimentaires est remplacée par le substitut de matière grasse animale (qui est un substitut végétal).

Dans un autre mode de réalisation, la totalité de la matière grasse animale de ces préparations alimentaires est remplacée par le substitut de matière grasse animale.

A titre d'exemple, on peut remplacer, dans un produit de charcuterie comme le saucisson sec, la totalité de la matière grasse animale constituée généralement de bardière de porc, par une quantité équivalente voir inférieure (la teneur en matière grasse du saucisson fabriqué sera par exemple de 15%, au lieu de 20% pour un saucisson sec classique) du substitut selon l'invention.

On peut faire de même avec une préparation alimentaire à base de viande bovine (veau, vache, boeuf), de viande de volaille (oie, poule, poulet, dinde, dindon, faisan...), de viande de gibier (lapin, chevreuil, sanglier...), de viande de mouton et/ou de poisson (saumon, truite, perche, lotte, cabillaud...), dans le but d'obtenir une préparation dépourvue de constituants d'origine porcine.

Les préparations alimentaires comprenant au moins un substitut selon la présente invention ont notamment un aspect visuel et un goût comparables aux préparations alimentaires équivalentes dans lesquelles la matière grasse animale n'est pas substituée (voir analyses). Leur prix de fabrication est similaire.

Ces préparations alimentaires présentent également un pouvoir athérogène moindre, tel que démontré par les analyses rapportées ci-après, analyse 2.

L'invention concerne aussi le procédé de fabrication de préparations alimentaires comprenant au moins un substitut de matière grasse animale. Le procédé comprend les étapes suivantes :

### - étape A : préparation de la viande et/ou du poisson

Cette étape consiste en un broyage, un hachage et/ou un découpage de la viande et/ou du poisson.

La viande peut être choisie parmi la viande de porc, la viande bovine (veau, vache, boeuf), la viande de volaille (oie, poule, poulet, dinde, dindon, faisan...), la viande de gibier (lapin, chevreuil, sanglier...) et/ou la viande de mouton. Le poisson peut être par exemple du saumon, de la truite, de la perche, de la lotte et/ou du cabillaud.

### - étape B : mise en contact de la viande et/ ou du poisson avec au moins un substitut de matière grasse animale décrit dans la présente invention.

Dans un mode de réalisation; cette étape consiste à mélanger à froid la viande et/ou le poisson avec au moins un substitut de matière grasse animale. C'est le cas par exemple lors de la fabrication de produits secs ou à cuire, ou de produits cuits fabriqués à froid.

Ce mélange peut être effectué à une température comprise entre -10°C et -5 ° C. Dans un mode de réalisation, ce mélange est effectué à une température de -8 ° C.

Dans un autre mode de réalisation, l'étape B consiste à faire cuire la viande et/ou le poisson dans une matière grasse végétale contenant au moins un substitut de matière grasse animale. C'est le cas par exemple lors de la fabrication de produits cuits fabriqués à chaud comme les rillettes.

Dans un mode de réalisation, le substitut de matière grasse animale peut avoir préalablement été découpé sous la forme de blocs cubiques. II peut s'agir de blocs de 3 cm de côté.

Dans un mode de réalisation, le procédé peut comporter une étape supplémentaire:

### - étape C : embossage et/ou cuisson de la préparation alimentaire.

L'embossage consiste à remplir des boyaux avec la préparation alimentaire obtenue afin de l'envelopper. Il peut s'agir de boyaux naturels, de boyaux collés qui sont des boyaux naturels dont on a modifié le diamètre par étirement et que l'on a ensuite séchés, de boyaux reconstitués dont la matière première est constituée par du collagène animal, ou de boyaux cellulosiques dont la matière première n'est plus d'origine animale mais végétale.

La cuisson concerne par exemple les produits cuits fabriqués à froid comme les saucisses de Strasbourg.

Dans un mode de réalisation, le procédé peut comporter une étape supplémentaire :

### - étape D : séchage de la préparation alimentaire.

Un procédé de fabrication particulier consiste à fabriquer un saucisson selon les étapes suivantes :
- étape A : hachage de la viande,
- étape B : mélange à froid de la viande hachée avec au moins un substitut de matière grasse animale découpé préalablement sous la forme de blocs cubiques,

Dans un mode de réalisation, la viande hachée a une température de -5°C et le substitut de matière grasse animale a une température de -8°C.
- étape C : embossage à froid. L'embossage peut être effectué à une température comprise entre 0 et 2°C.
- étape D : séchage du saucisson.

Afin d'illustrer tous ces résultats et avantages apportés par le substitut selon la présente invention, diverses analyses ont été réalisées:

### Analyse 1 : détermination de la composition en acides gras d'une bardière de porc et d'huiles pouvant entrer dans la composition du substitut selon la présente invention

La composition en acides gras d'un échantillon de bardière de porc (E649) et de plusieurs huiles a été déterminée selon la méthode normalisée (NF EN ISO 5508&5509). Les résultats sont rapportés dans le tableau 1.

**Tableau 1 : composition en acides gras d'une bardière de porc et d'huiles pouvant entrer dans la composition du substitut selon la présente invention**

| | | bardière de porc | Huile de tournesol | Huile de colza | Huile de palme raffinée | Huile de palme hydrogénée (GV 60) | Huile de hydrogénée (P44, P41) |
|---|---|---|---|---|---|---|---|
| Appellation commune | ACIDES GRAS | % | % | % | % | % | % |
| a.caprylique | 8:00 | | | | < 0,1 | | < 0,1 |
| a.caprique | 10 : 0 | 0,1 | | | < 0,1 | | < 0,1 |
| a.laurique | 12 :0 | 0,1 | | | 0,3 | < 0,1 | 0,3 |
| a.myristique | 14:0 | 1,3 | 0,1 | 0,1 | 1,2 | < 0,1 | 1,1 |
| | 15 : 0 | 0,1 | < 0,1 | < 0,1 | 0,1 | 0,3 | 0,1 |
| a.palmitique | 16:0 | 24,7 | 6,5 | 4,7 | 43,8 | 1,1 | 44,6 |
| a.palmitoléique | 16:1 1 | 2,3 | 0,1 | 0,3 | 0,2 | 0,1 | 0,2 |
| a.margarique | 17 : 0 | 0,4 | < 0,1 | 0, 1 | 0,1 | 42,9 | 0,1 |
| | 17 : 1 | 0,4 | < 0,1 | 0,1 | < 0,1 | < 0,1 | < 0,1 |
| a.stéarique | 18:0 | 14,3 | 4,3 | 1,6 | 4,3 | 0,1 | 8,4 |
| | 18 : 1 trans | 0,2 | < 0,1 | < 0,1 | < 0,1 | < 0,1 | 8,3 |
| a.oléique | 18 : 1 cis | 40,9 | 24,3 | 60,8 | 38,1 | 54,4 | 32,5 |
| | 18 : 2 trans | < 0,1 | 0,3 | 0,1 | 0,8 | 0,1 | 1,3 |
| a.linoléique | 18:2 cis (n-6) | 11,6 | 62,7 | 19,9 | 9,3 | 0,2 | 2,4 |
| | 18 : 3 trans | 0,1 | < 0,1 | 0,7 | 0,1 | < 0,1 | < 0,1 |
| a.linolénique | 18 : 3 cis (n-3) | 1,2 | 0,1 | 8,5 | 0,1 | < 0,1 | < 0,1 |
| a.arachidique | 20 : 0 | 0,3 | 0,3 | 0,6 | 0,4 | < 0,1 | 0,4 |
| a.gondoïque | 20 : 1 | 0,9 | 0,2 | 1,3 | 0,1 | < 0,1 | 0,1 |
| | 20 : 2 | 0,5 | | | | 0,5 | |
| | 20 : 4 | 0,2 | | | | < 0,1 | |
| a.béhénique | 22 : 0 | 0,2 | 0,7 | 0,3 | 0,1 | 0,1 | 0,1 |
| a.écurique | 22 : 1 | < 0,1 | < 0,1 | 0,3 | < 0,1 | < 0,1 | < 0,1 |
| a.lignocérique | 24 : 0 | < 0,1 | 0,2 | 0,1 | 0,1 | 0,1 | 0,1 |
| a.nervonique | 24 : 1 | < 0,1 | < 0,1 | 0,1 | < 0,1 | < 0,1 | < 0,1 |
| non identifié | | 0,2 | 0,2 | 0,4 | 0,9 | 0,1 | 0,0 |
| | | | | | | | |
| A.G. saturés | | 41,5 | 12,1 | 7,5 | 50,4 | 99,6 | 55,2 |
| A.G. monoinsaturés | | 44,5 | 24,6 | 62,9 | 38,4 | 0,2 | 32,8 |
| A.G. polyinsaturés | | 13,5 | 62,8 | 28,4 | 9,4 | < | 0,1 2,4 |
| dont (n-6) | | 11,6 | 62,7 | 19,9 | 9,3 | < 0,1 | 2,4 |
| dont (n-3) | | 1,2 | 0,1 | 8,5 | 0,1 | < 0,1 | < 0,1 |
| A.G trans totaux | | 0,3 | 0,3 | 0,8 | 0,9 | 0,1 | 9,6 |

### Analyse 2 : détermination de la composition en acides gras d'une bardière de porc et de quatre substituts de matière grasse animale consistant en un mélange d'une huile de palme totalement ou partiellement hydrogénée avec une huile de colza.

La composition en acides gras d'un échantillon de bardière de porc (E649) et de quatre substituts de matière grasse animale constitués d'huile de palme totalement ou partiellement hydrogénée et d'huile de colza a été déterminée selon la méthode normalisée (NF EN ISO 5508&5509). Les résultats sont rapportés dans le tableau 2 et le rapport entre les acides gras oméga 6 et oméga 3 a été calculé.

**Tableau 2 : composition en acides gras d'une bardière de porc et de quatre substituts de matière grasse animale selon la présente invention**

| | | bardière de porc | Substitut comprenant 25% d'huile de colza +75% de P44 (ou P41) | Substitut comprenant 30% d'huile de colza +70% de P44 (ou P41) | Substitut comprenant 25% d'huile de colza + 37,5% d'huile de palme raffinée + 37,5% de P44 ou P41 | Substitut comprenant 25% d'huile de colza + 22,5% d'huile de palme raffinée + 52,5% de P44 ou P41 |
|---|---|---|---|---|---|---|
| Appellation commune | ACIDES GRAS | % | % | % | % | % |
| a.caprylique | 8:00 | | 0,0 | 0,0 | 0,0 | 0,0 |
| a.caprique | 10:0 | 0,1 | 0,0 | 0,0 | 0,0 | 0,0 |
| a.laurique | 12:0 | 0,1 | 0,2 | 0,2 | 0,2 | 0,2 |
| a.myristique | 14 : 0 | 1,3 | 0,9 | 0,8 | 0,9 | 0,9 |
| | 15 : 0 | 0,1 | 0,1 | 0,1 | 0,1 | 0,1 |
| a.palmitique | 16:0 | 24,7 | 34,6 | 32,6 | 34,3 | 34,4 |
| a.palmitoléique | 16: 1 | 2,3 | 0,2 | 0,2 | 0,2 | 0,2 |
| a.margarique | 17 : 0 | 0,4 | 0,1 | 0,1 | 0,1 | 0,1 |
| | 17: 1 | 0,4 | 0,0 | 0,0 | 0,0 | 0,0 |
| a.stéarique | 18:0 | 14,3 | 6,7 | 6,4 | 5,2 | 5,8 |
| | 18 : 1 trans | 0,2 | 6,2 | 5,8 | 3,1 | 4,4 |
| a.oléique | 18 : 1 cis | 40,9 | 39,6 | 41,0 | 41,7 | 40,8 |
| | 18 : 2 trans | < 0,1 | 1,0 | 0,9 | 0,8 | 0,9 |
| a.linoléique | 18 : 2 cis (n-6) | 11,6 | 6,8 | 7,7 | 9,4 | 8,3 |
| | 18 : 3 trans | 0,1 | 0,2 | 0,2 | 0,2 | 0,2 |
| a.linolénique | 18:3 cis (n-3) | 1,2 | 2,1 | 2,6 | 2,2 | 2,1 |
| a.arachidique | 20:0 | 0,3 | 0,5 | 0,5 | 0,5 | 0,5 |
| a.gondoïque | 20:1 1 | 0,9 | 0,4 | 0,5 | 0,4 | 0,4 |
| | 20:2 | 0,5 | 0,0 | 0,0 | 0,0 | 0,0 |
| | 20 : 4 | 0,2 | 0,0 | 0,0 | 0,0 | 0,0 |
| a.béhénique | 22 : 0 | 0,2 | 0,2 | 0,2 | 0,2 | 0,2 |
| a.écurique | 22 : 1 | < 0,1 | 0,1 | 0,1 | 0,1 | 0,1 |
| a.lignocérique | 24 : 0 | < 0,1 | 0,1 | 0,1 | 0,1 | 0,1 |
| a.nervonique | 24 : 1 | < 0,1 | 0,0 | 0,0 | 0,0 | 0,0 |
| non identifié | | 0,2 | 0,1 | 0,12 | 0,4375 | 0,302 |
| A.G. saturés | | 41,5 | 43,1 | 40,7 | 41,5 | 42,2 |
| A.G. monoinsaturés | | 44,5 | 40,3 | 41,8 | 42,4 | 41,6 |
| A.G. polyinsaturés | | 13,5 | 8,9 | 10,2 | 11,5 | 10,5 |
| dont (n-6) | | 11,6 | 6,8 | 7,7 | 9,4 | 8,3 |
| dont (n-3) | | 1,2 | 2,1 | 2,6 | 2,2 | 2,1 |
| Rapport (n-6)/(n-3) | | 9,7 | 3,2 | 3,0 | 4,3 | 4,0 |
| A.G trans totaux | | 0,3 | 7,4 | 7,0 | 4,1 | 5,4 |

Les huiles P41 et P44 sont deux huiles de palme partiellement hydrogénées qui ont une composition quasiment identique et un point de fusion très proche.

Le rapport entre les acides gras essentiels oméga 6 et oméga 3 préconisé par les Apports Nutritionnels Conseillés (ANC) est de 5. Les substituts selon la présente invention présentent une composition en acides gras intéressante, permettant d'obtenir un rapport entre les acides gras oméga 6 et oméga 3 ayant une valeur très proche (de 3 à 4,3) de la valeur recommandée par les ANC, alors que ce rapport est de 9,7 pour la bardière de porc. Le pouvoir athérogène de ces substituts est donc moindre par rapport à celui de la bardière de porc.

Analyse 3 : caractérisation rhéologique d'une bardière de porc et de deux substituts de matière grasse animale constitués d'huile de palme totalement hydrogénée et d'huile de colza.

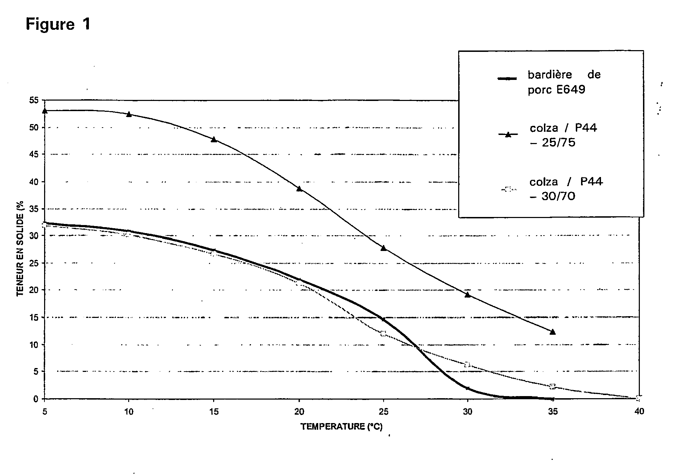

Un échantillon de bardière de porc (E649) et des deux premiers substituts de matière grasse animale du tableau 2 (constitués d'huile de palme totalement hydrogénée et d'huile de colza) ont été analysés selon la méthode normalisée (NF EN ISO 8292) afin de déterminer la teneur en solide en fonction de la température. Les résultats sont illustrés à la figure 1.

Il apparaît d'après cette figure que les courbes des substituts de matière grasse animale présentent un profil proche de celle obtenue avec la référence « bardière de porc ».

Analyse 4 : diverses études après la fabrication de deux lots de saucissons dont la totalité de la matière grasse animale est remplacée par un substitut selon la présente invention.

Des saucissons ont été fabriqués selon le procédé suivant:
- préparation de la viande par broyage,
- mélange à froid de la viande avec 15% (pour le premier lot) et 20% (pour le second) par rapport au poids total du saucisson, d'un substitut de matière grasse animale,
- embossage,
- séchage.

Des saucissons ont été fabriqués avec les quatre exemples de substituts du tableau 2.
- Des études sensorielles ont été réalisées. Elles ont abouti à de bons résultats du point de vue de la texture, de l'aspect visuel (on retrouve les marquants du saucisson) et du goût pour les saucissons fabriqués avec chacun des quatre substituts.
- Des tests portant sur l'évolution des produits ont été menés en mettant des saucissons (des saucissons « traditionnels » à base de bardière de porc - appelés « saucissons témoins », et des saucissons - appelés « saucissons provenant de l'essai » - dont la totalité de la bardière de porc est remplacée par un substitut consistant en 25% d'huile de colza et 75% de P41 (ou P44), avec une teneur de 15% dans le saucisson final) en conditions de vieillissement accéléré (étuve à 40°C). L'étude a porté sur des saucissons non congelés ou ayant subi une étape de congélation (ralentissant l'oxydation de la matière grasse), et sur des saucissons en l'état ou tranchés.

Les paramètres de l'oxydation sont mesurés notamment par l'indice de peroxyde sur la matière grasse à des temps définis. Les résultats sont illustrés dans les tableaux 3, 4 et 5 suivants :

**Tableau 3 : mesure de l'indice de peroxyde après congélation des échantillons**

| Référence de l'échantillon | Indice de peroxyde (méqO₂/kg) (*moyenne de deux déterminations*) |
|---|---|
| T = 0 jour | |
| Saucisson TEMOIN Ficelle grise | 4,8 ± *1,9* |
| Saucisson provenant de l'ESSAI Ficelle orange | 3,3 ± *1,3* |
| T = 7 jours | |
| Saucisson TEMOIN Ficelle grise | 3,9 ± *1,6* |
| Saucisson provenant de l'ESSAI Ficelle orange | 4,6 ± *1,8* |
| T = 14 jours | |
| Saucisson TEMOIN Ficelle grise | 4,3 ± *1,7* |
| Saucisson provenant de l'ESSAI Ficelle orange | 4,1 ± *1,6* |
| T = 21 jours | |
| Saucisson TEMOIN Ficelle grise | 2,7 ± *1,1* |
| Saucisson provenant de l'ESSAI Ficelle orange | 3,4 ± *1,4* |

**Tableau 4 : mesure de l'indice de peroxyde et de l'indice d'anisidine après conservation des échantillons en l'état à température ambiante (18 ± 2°C)**

| Référence de l'échantillon | Indice de peroxyde (méqO₂/kg) *(moyenne de deux déterminations)* | Indice d'anisidine *(moyenne de deux déterminations)* |
|---|---|---|
| TO | | |
| Saucisson TEMOIN Ficelle grise | 4,4 ± *1,7* | 16,1 |
| Saucisson provenant de l'ESSAI Ficelle orange | 2,5 ± *1,0* | 13,1 |
| T = 60 jours | | |
| Saucisson TEMOIN Ficelle grise | 3,4 ± *1,4* | 12,9 |
| Saucisson provenant de l'ESSAI Ficelle orange | 1,2 ± *1,0* | 12,3 |

**Tableau 5 : mesure de l'indice de peroxyde après que les échantillons aient été tranchés et conservés à +8°C ou +18°C dans des boîtes plastiques étanches**

| Indice de peroxyde (méqO₂/kg) *(moyenne de deux déterminations)* | | |
|---|---|---|
| Référence de l'échantillon | Température de conservation + 8°C | Température de conservation + 180°C |
| TO | | |
| Saucisson TEMOIN Ficelle grise | 4,4 ± *1,7* | 4,4 ± *1,7* |
| Saucisson provenant de l'ESSAI Ficelle orange | 2,5 ± *1,0* | 2,5 ± *1,0* |
| T = 2 jours | | |
| Saucisson TEMOIN Ficelle grise | 3,2 ± *1,0* | 2,4 ± *1,0* |
| Saucisson provenant de l'ESSAI Ficelle orange | 3,7 ± *1,2* | 3,1 ± *1,2* |
| T = 4 jours | | |
| Saucisson TEMOIN Ficelle grise | 4,2 ± *1,7* | 3,6 ± *1,4* |
| Saucisson provenant de l'ESSAI Ficelle orange | 4,8 ± *1,9* | 4,2 ± *1,7* |

Ces tests démontrent un bon vieillissement des saucissons dont la totalité de la matière grasse animale est remplacée par le substitut selon l'invention.
- Une analyse nutritionnelle a également été réalisée sur les saucissons comprenant soit 15%, soit 20 % d'un substitut formé de 25% d'huile de colza et de 75% d'huile de palme hydrogénée P41 (ou P 44), par rapport au poids total de saucisson.

Les résultats sont les suivants :
Analyse d'un saucisson comprenant 20% de substitut de matière grasse animale :
   - 8,66% d'acides gras saturés (AGS),
   - 8,06% d'acides gras monoinsaturés (AGMI),
   - 1,78% d'acides gras polyonsaturés (AGPI),
   - 1,36% d'acides gras oméga 6,
   - 0,42% d'acides gras oméga 3,
soit un rapport oméga 6 / oméga 3 de 3,2
   - 1,48% d'acides gras trans (AGT).
Analyse d'un saucisson comprenant 15% de substitut de matière grasse animale :
   - 6,5% d'acides gras saturés (AGS),
   - 6,1 % d'acides gras monoinsaturés (AGMI),
   - 1,3% d'acides gras polyonsaturés (AGPI),
   - 1,0% d'acides gras oméga 6,
   - 0,3% d'acides gras oméga 3,
      soit un rapport oméga 6 / oméga 3 de 3,3
   - 1,1 % d'acides gras trans (AGT).

Le rapport entre les acides gras oméga 6 et oméga 3 ont une valeur proche de celle recommandée par les ANC (qui est de 5), alors que ce rapport est de 9,7 pour la bardière de porc. Le pouvoir athérogène de ces saucissons est donc moindre par rapport à celui des saucissons traditionnels à base de bardière de porc.

Les exemples suivants sont donnés à titre indicatif et ne limitent en aucun cas la présente invention.

### Exemple 1 : saucisson végétal à base de viande de porc.

Un substitut de matière grasse animale est préparé selon le procédé suivant :
- étape A : fusion de l'huile de palme totalement hydrogénée (représentant 75% du poids total du substitut),
- étape B : mélange de l'huile de palme totalement hydrogénée fondue avec une huile de colza (représentant 25% du poids total du substitut),
- étape C : refroidissement sous agitation,
- étape D : stockage au froid.

Un saucisson est ensuite fabriqué selon le procédé suivant :
- préparation de la viande de porc par broyage,
- mélange à froid de la viande avec 14% par rapport au poids total du saucisson d'un substitut préparé antérieurement,
- embossage,
- séchage

### Exemple 2 : saucisson végétal à base de viande de dinde et de viande de lapin.

Un substitut comprenant 25% d'huile de colza + 37,5% d'huile de palme raffinée + 37,5% d'huile de palme hydrogénée (l'huile de palme comprend donc 50% d'huile de palme raffinée et 50% d'huile de palme hydrogénée) est fabriqué selon un procédé analogue à celui de l'exemple 1, les huiles de palme raffinée et de palme hydrogénée étant fondues séparément puis mélangées.

Selon le mode opératoire décrit dans l'exemple 1, on prépare un saucisson dans lequel la viande de porc est remplacée par un mélange comprenant 50% de viande de dinde et 50% de viande de lapin.

### Exemple 3 : saucisse à base de poisson, dont la moitié de sa matière grasse animale est remplacée par un substitut de matière grasse animale.

Un substitut comprenant 30% d'huile de son de riz et 70% d'huile de palme hydrogénée est fabriqué selon un procédé analogue à celui de l'exemple 1.

Une saucisse à base de poisson, dont la moitié de sa matière grasse animale est remplacée par le substitut de matière grasse animale, (le substitut est alors présent en une quantité de 20% par rapport au poids total de la saucisse) est fabriquée selon le procédé de l'invention.

### Exemple 4 : préparation de rillettes après cuisson dans un substitut de matière grasse animale.

On prépare le même substitut que celui de l'exemple 1.

Des rillettes sont ensuite préparées selon le procédé de l'invention, en intégrant 40% de substitut par rapport au poids total des rillettes.

## Revendications

1. Substitut de matière grasse animale comprenant un mélange d'une huile de palme semi-solide, représentant de 70% à 80% de la masse totale du substitut, et sélectionnée parmi le groupe constitué par de l'huile de palme fractionnée ou de l'huile de palme totalement ou partiellement hydrogénée, avec au moins une huile végétale fluide à température ambiante possédant des qualités gustatives et/ou nutritionnelles, représentant de 20 à 30% de la masse totale du substitut.

2. Substitut de matière grasse animale selon la revendication 1 **caractérisé en ce que** l'huile de palme semi-solide est l'huile de palme totalement ou partiellement hydrogénée.

3. Substitut selon la revendication 2, **caractérisé en ce que** l'huile de palme totalement ou partiellement hydrogénée représente de 72 à 77% de la masse totale du substitut et l'huile végétale fluide à température ambiante représente 23 à 28 % de la masse totale du substitut.

4. Substitut selon l'une quelconque des revendications 2 ou 3, **caractérisé en ce que** lorsque l'huile de palme est partiellement hydrogénée, elle comprend une huile de palme raffinée et une huile de palme hydrogénée.

5. Substitut selon la revendication 4, **caractérisé en ce que** l'huile de palme comprend de 10 à 60% d'huile de palme raffinée et de 90 à 40% d'huile de palme hydrogénée.

6. Substitut selon la revendication 5, **caractérisé en ce que** l'huile de palme comprend 45 à 50% d'huile de palme raffinée et 50 à 55% d'huile de palme hydrogénée.

7. Substitut selon l'une quelconque des revendications 1 à 6, **caractérisé en ce que** l'huile végétale fluide à température ambiante possédant des qualités gustatives et/ou nutritionnelles est choisie parmi les huiles de céréales, les huiles d'oléagineuses et les huiles de fruits, seules ou en mélange.

8. Procédé de fabrication du substitut de matière grasse animale tel que revendiqué dans les revendications 2 à 7, **caractérisé en ce qu'**il comprend les étapes suivantes :
- étape A : fusion de l'huile de palme totalement ou partiellement hydrogénée,
- étape B : mélange de l'huile de palme totalement ou partiellement hydrogénée fondue avec au moins une huile végétale fluide à température ambiante possédant des qualités gustatives et/ou nutritionnelles,
- étape C : refroidissement sous agitation,
- étape D : stockage au froid.

9. Utilisation d'au moins un substitut de matière grasse animale selon l'une quelconque des revendications 1 à 7, dans une préparation alimentaire.

10. Utilisation selon la revendication 9, **caractérisée en ce que** la préparation alimentaire est un produit choisi parmi les saucissons, les saucisses ou les mortadelles.

11. Préparation alimentaire **caractérisée en ce qu'**elle comprend au moins un substitut de matière grasse animale tel que défini selon l'une quelconque des revendications 1 à 7.

12. Préparation alimentaire selon la revendication 11, **caractérisée en ce qu'**elle est à base de viande et/ou de poisson.

13. Préparation alimentaire selon la revendication 12, **caractérisée en ce qu'**il s'agit d'un produit de salaison.

14. Préparation alimentaire selon la revendication 13, **caractérisée en ce qu'**il s'agit d'un produit choisi parmi les saucissons, les saucisses ou les mortadelles.

15. Procédé de fabrication d'une préparation alimentaire telle que revendiquée selon l'une des revendications 11 à 14, **caractérisé en ce qu'**il comprend les étapes suivantes :
- étape A : préparation de la viande et/ ou du poisson
- étape B : mise en contact de la viande et/ ou du poisson avec au moins un substitut de matière grasse animale tel que revendiqué aux revendications 1 à 7.

16. Procédé de fabrication d'un saucisson **caractérisé en ce qu'**il comprend les étapes suivantes :
- étape A : hachage de la viande,
- étape B : mélange à froid de la viande hachée avec au moins un substitut de matière grasse animale tel que revendiqué aux revendications 1 à 7 découpé préalablement sous la forme de blocs cubiques,
- étape C : embossage à froid,
- étape D : séchage du saucisson.

## Claims

1. A substitute for animal fat comprising a mixture of semi-solid palm oil accounting for 70% to 80% of the total mass of the substitute, and selected from the group formed by fractionated palm oil or totally or partly hydrogenated palm oil, with at least one vegetable oil fluid at room temperature having gustatory and/or nutritional properties, accounting for 20 to 30% of the total mass of the substitute.

2. The animal fat substitute according to claim 1, **characterized in that** the semi-solid palm oil is totally or partly hydrogenated palm oil.

3. The substitute according to claim 2, **characterized in that** the totally or partly hydrogenated palm oil accounts for 72 to 77% of the total mass of the substitute and the vegetable oil fluid at room temperature accounts for 23 to 28% of the total mass of the substitute.

4. The substitute according to any of claims 2 or 3, **characterized in that** when the palm oil is partly hydrogenated, it comprises a refined palm oil and a hydrogenated palm oil.

5. The substitute according to claim 4, **characterized in that** the palm oil comprises from 10 to 60% of refined palm oil and from 90 to 40% of hydrogenated palm oil.

6. The substitute according to claim 5, **characterized in that** the palm oil comprises from 45 to 50% of refined palm oil and from 50 to 55% of hydrogenated palm oil.

7. The substitute according to any of claims 1 to 6, **characterized in that** the vegetable oil fluid at room temperature having gustatory and/or nutritional properties is selected from cereal oils, oleaginous oils, and fruit oils, alone or as a mixture.

8. The method for making an animal fat substitute as claimed in claims 2 to 7, **characterized in that** it comprises the following steps:
- step A: melting of the totally or partly hydrogenated palm oil,
- step B: mixing molten totally or partly hydrogenated palm oil with at least one fluid vegetable oil at room temperature having gustatory and/or nutritional properties,
- step C: cooling with stirring,
- step D: cold storage.

9. The use of at least one animal fat substitute according to any of claims 1 to 7 in a food preparation.

10. The use according to claim 9, **characterized in that** the food preparation is a product selected from dry sausages, sausages or mortadellas.

11. A food preparation **characterized in that** it comprises at least one animal fat substitute as defined according to any of claims 1 to 7.

12. The food preparation according to claim 11, **characterized in that** it is based on meat and/or fish.

13. The food preparation according to claim 12, **characterized in that** it is a salt product.

14. The food preparation according to claim 13, **characterized in that** it is a product selected from dry sausages, sausages or mortadellas.

15. A method for making a food preparation as claimed according to any of claims 11 to 14, **characterized in that** it comprises the following steps:
- step A: preparing the meat and/or of the fish
- step B: putting the meat and/or the fish in contact with at least one animal fat substitute as claimed in claims 1 to 7.

16. A method for making a dry sausage **characterized in that** it comprises the following steps:
- step A: mincing the meat,
- step B: cold mixing of the minced meat with at least one animal fat substitute as claimed in claims 1 to 7, cut beforehand as cubic blocks,
- step C: cold embossing,
- step D: drying of the sausage.

## Patentansprüche

1. Tierfettersatz, der ein Gemisch aus einem halbfesten Palmöls umfasst, das 70 % bis 80 % der Masse insgesamt des Ersatzes darstellt und aus der Gruppe ausgewählt ist, die von fraktioniertem Palmöl oder von vollständig oder teilweise hydrogeniertem Palmöl gebildet wird und mindestens einem bei Raumtemperatur flüssigen Pflanzenöl, das geschmackliche und/oder nutritive Eigenschaften besitzt, das 20 bis 30 % der Masse insgesamt des Ersatzes darstellt.

2. Tierfettersatz nach Anspruch 1, **dadurch gekennzeichnet, dass** das halbfeste Palmöl das vollständig oder teilweise hydrogenierte Palmöl ist.

3. Ersatz nach Anspruch 2, **dadurch gekennzeichnet**, das das vollständig oder teilweise gehärtete Palmöl 72 bis 77 % der Masse insgesamt des Ersatzes darstellt und das bei Raumtemperatur flüssige Pflanzenöl 23 bis 28 % der Masse insgesamt des Ersatzes darstellt.

4. Ersatz nach einem der Ansprüche 2 oder 3, **dadurch gekennzeichnet, dass**, wenn das Palmöl teilweise hydrogeniert ist, es ein raffiniertes Palmöl und ein hydronegiertes Palmöl umfasst.

5. Ersatz nach Anspruch 4, **dadurch gekennzeichnet, dass** das Palmöl 10 bis 60 % raffiniertes Palmöl und 90 bis 40 % hydrogeniertes Palmöl umfasst.

6. Ersatz nach Anspruch 5, **dadurch gekennzeichnet, dass** das Palmöl 45 bis 50 % raffiniertes Palmöl und 50 bis 55 % hydrogeniertes Palmöl umfasst.

7. Ersatz nach einem der Ansprüche 1 bis 6, **dadurch gekennzeichnet, dass** das bei Raumtemperatur flüssige Pflanzenöl, das geschmackliche und/oder nutritive Eigenschaften besitzt, aus den Getreideölen, den Ölfruchtölen und den Fruchtölen, allein oder im Gemisch, ausgewählt ist.

8. Verfahren zur Herstellung des Tierfettersatzes, so wie in den Ansprüchen 2 bis 7 beansprucht, **dadurch gekennzeichnet, dass** es die folgenden Schritte umfasst:
- Schritt A: Schmelzen des vollständig oder teilweise hydrogenierten Palmöls,
- Schritt B: Mischen des geschmolzenen vollständig oder teilweise hydrogenierten Palmöls mit mindestens einem bei Raumtemperatur flüssigen Pflanzenöls, das geschmackliche und/oder nutritive Eigenschaften besitzt,
- Schritt C: Abkühlen unter Rühren,
- Schritt D: gekühlte Lagerung.

9. Verwendung mindestens eines Tierfettersatzes nach einem der Ansprüche 1 bis 7 in einer Nahrungsmittelzubereitung.

10. Verwendung nach Anspruch 9, **dadurch gekennzeichnet, dass** die Nahrungsmittelzubereitung ein Produkt ist, das aus den Würsten, den Würstchen oder den Mortadellas ausgewählt ist.

11. Nahrungsmittelzubereitung, **dadurch gekennzeichnet, dass** sie mindestens einen Tierfettersatz umfasst, so wie nach einem der Ansprüche 1 bis 7 definiert.

12. Nahrungsmittelzubereitung nach Anspruch 11, **dadurch gekennzeichnet, dass** sie auf Fleisch und/oder Fisch basiert.

13. Nahrungsmittelzubereitung nach Anspruch 12, **dadurch gekennzeichnet, dass** es sich um ein Pökelfleischprodukt handelt.

14. Nahrungsmittelzubereitung nach Anspruch 13, **dadurch gekennzeichnet, dass** es sich um ein Produkt handelt, das aus den Würsten, den Würstchen oder den Mortadellas ausgewählt ist.

15. Verfahren zur Herstellung einer Nahrungsmittelzubereitung, so wie in einem der Ansprüche 11 bis 14 beansprucht, **dadurch gekennzeichnet, dass** es die folgenden Schritte umfasst:
- Schritt A: Vorbereitung des Fleischs und/oder des Fischs,
- Schritt B: Herstellung des Kontakts des Fleischs und/oder des Fischs mit mindestens einem Tierfettersatz, so wie in den Ansprüchen 1 bis 7 beansprucht.

16. Verfahren zur Herstellung einer Wurst, **dadurch gekennzeichnet, dass** es die folgenden Schritte umfasst:
- Schritt A: Durchdrehen des Fleischs,
- Schritt B: Kaltes Mischen des durchgedrehten Fleischs mit mindestens einem Tierfettersatz, so wie in den Ansprüchen 1 bis 7 beansprucht, der zuvor gewürfelt wurde,
- Schritt C: Kaltformung,
- Schritt D: Trocknen der Wurst.
